# EUROPEAN PATENT SPECIFICATION

(11) **EP 3 640 255 B1**
(45) Date of publication and mention of the grant of the patent: **13.10.2021**
(21) Application number: 19203591.3
(22) Date of filing: 16.10.2019
(51) Int. Cl.: C07F 7/18

(54) **METHOD FOR PRODUCING SILICON COMPOUND, AND SILICON COMPOUND**
VERFAHREN ZUR HERSTELLUNG EINER SILICIUMVERBINDUNG UND SILICIUMVERBINDUNG
PROCÉDÉ DE PRODUCTION D'UN COMPOSÉ DE SILICIUM ET COMPOSÉ DE SILICIUM

(30) Priority: 16.10.2018 JP 2018195238
(43) Date of publication of application: 22.04.2020
(73) Proprietor: Shin-Etsu Chemical Co., Ltd., Tokyo (JP)
(72) Inventor: Mitsui, Ryo, Niigata (JP); Watanabe, Takeru, Niigata (JP); Tachibana, Seiichiro, Niigata (JP); Ogihara, Tsutomu, Niigata (JP)
(74) Representative: Wibbelmann, Jobst

(56) References cited:
- JP-B2- 4 540 141
- US-A1- 2012 276 483
- UOZUMI, YASUHIRO ET AL: "Asymmetric functionalization of bicycloalkenes by catalytic enantioposition-selective hydrosilylation", TETRAHEDRON LETTERS, vol. 33, no. 47, 17 November 1992 (1992-11-17), pages 7185-7188, XP002797999, ISSN: 0040-4039, DOI: 10.1016/S0040-4039(00)60868-7 10.1016/S0040-4039(00)60868-7

## Description

### TECHNICAL FIELD

The present invention relates to a highly-efficient industrial method for producing an industrially useful silicon compound.

### BACKGROUND ART

The introduction of a hydrolysable silicon compound having an alicyclic structure (particularly a norbornane ring) and a carbonyl group is useful for adjusting various properties of a condensation resin. For example, in the multilayer resist method used for fine processing in the manufacturing process of a semiconductor device or the like, it has been proposed to apply such a hydrolysable silicon compound to a composition for forming a silicon-containing film used as an intermediate layer, or to a silicon-containing photoresist composition (for example, Patent Documents 1, 2) .

The hydrolysable silicon compound can be produced through a hydrosilylation reaction between a hydrosilane compound and a carbonyl group-containing alicyclic olefin compound. For example, Patent Document 3 has proposed a method in which, in the presence of a platinum catalyst, a carboxylic acid compound is added into a system before the initiation of the hydrosilylation reaction or by the early stages of the reaction. Additionally, Patent Document 4 has proposed a method in which the hydrosilylation reaction of 2-norbornene takes place in the presence of a platinum catalyst and an ammonium salt of an acid. From the foregoing, there has been desired a more highly efficient, industrial production method which involves a hydrosilylation reaction between a hydrosilane compound and a carbonyl group-containing alicyclic olefin compound.

### CITATION LIST

### PATENT LITERATURE

Patent Document 1: Japanese Patent No. 3533951
Patent Document 2: Japanese Patent No. 5882776
Patent Document 3: Japanese Patent No. 4540141
Patent Document 4: Japanese Patent No. 5870905

Y. Uozumi et al. disclose in Tetrahedron Letters, Vol. 33, No. 47, 17 November 1992, pages 7185-7188, "Asymmetric functionalization of bicycloalkenes by catalytic enantioposition-selective hydrosilylation".

US 2012/276483 A1 concerns a patterning process and discloses the preparation of an ester useful for forming silicon-containing films used in photoresist compositions.

### SUMMARY OF INVENTION

### TECHNICAL PROBLEM

The present invention has been made in view of the above circumstances. An object of the present invention is to provide a highly-efficient industrial method for producing an industrially useful, hydrolysable silicon compound having an alicyclic structure (particularly a norbornane ring) and a carbonyl group.

### SOLUTION TO PROBLEM

To achieve the object, the present invention provides a method for producing a silicon compound shown by the following general formula (3) through a hydrosilylation reaction between a hydrosilane compound shown by the following general formula (1) and a carbonyl group-containing alicyclic olefin compound shown by the following general formula (2), wherein
the hydrosilylation reaction between the hydrosilane compound shown by the following general formula (1) and the carbonyl group-containing alicyclic olefin compound shown by the following general formula (2) takes place while an acidic compound or acidic compound precursor is gradually added thereto in presence of a platinum-based catalyst: 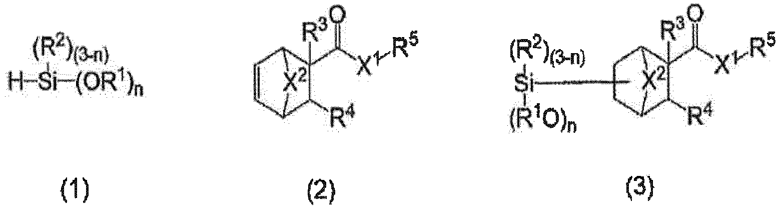 wherein R¹ and R² each independently represent a hydrocarbon group having 1 to 6 carbon atoms; "n" represents 1, 2, or 3; X¹ represents an oxygen atom or a single bond; X² represents a methylene group or an oxygen atom; R³ and R⁴ each independently represent a hydrogen atom or a methyl group; and R⁵ represents a monovalent group having 1 to 20 carbon atoms and is optionally bonded to R³ or R⁴ to form a ring.

Such a method for producing a silicon compound is a highly-efficient industrial method for producing an industrially useful, hydrolysable silicon compound having an alicyclic structure (particularly a norbornane ring) and a carbonyl group.

Moreover, the acidic compound or acidic compound precursor is preferably a carboxylic acid having 1 to 20 carbon atoms.

Such an acidic compound or acidic compound precursor is particularly preferable from the viewpoints of reactivity and yield.

Further, the carbonyl group-containing alicyclic olefin compound shown by the general formula (2) may be a 5-norbornene-2-carboxylic acid ester compound shown by the following general formula (4): 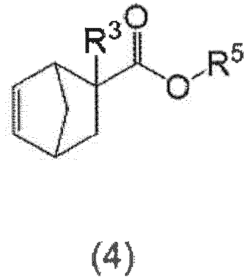 wherein R³ represents a hydrogen atom or a methyl group; and R⁵ represents a monovalent group having 1 to 20 carbon atoms and is optionally bonded to R³ to form a ring.

In the present invention, the carbonyl group-containing alicyclic olefin compound shown by the general formula (2) can be as described above.

In addition, the present invention provides a silicon compound shown by the following general formula (5) : 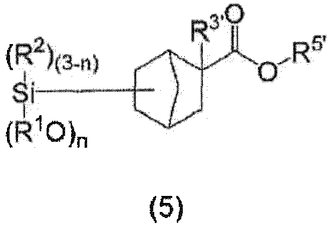 wherein R¹ and R² each independently represent a hydrocarbon group having 1 to 6 carbon atoms; "n" represents 1, 2, or 3; R^{3'} represents a hydrogen atom or a methyl group; and R^{5'} represents a substituted or unsubstituted aralkyl group having 7 to 20 carbon atoms, wherein substituted means that the substituent of R^{5'} is an alkyl group, an alkoxy group, an alkylcarbonyl group, an acyloxy group, an alkylthio group, a fluoroalkyl group, or an alkoxycarbonyl group, each of which has 1 to 13 carbon atoms; a cyano group or a fluorine atom.

Introducing such a silicon compound makes it possible to adjust various properties of condensation resins and is thus industrially useful. The silicon compound is applicable to, for example, a composition for forming a silicon-containing film used as an intermediate layer or a silicon-containing photoresist composition in the multilayer resist method used for fine processing in the manufacturing process of a semiconductor device or the like.

### ADVANTAGEOUS EFFECTS OF INVENTION

The inventive method for producing a silicon compound enables high yield production of an industrially-useful hydrolysable silicon compound having an alicyclic structure (particularly norbornane ring) and a carbonyl group, and facilitates the mass production. Thus, the industrial utility of the inventive method is quite high.

### BRIEF DESCRIPTION OF DRAWINGS

FIG. 1 is a nuclear magnetic resonance spectrum (¹H-NMR/CDCl₃) of the final product obtained in Example 3.
FIG. 2 is a nuclear magnetic resonance spectrum (¹H-NMR/CDCl₃) of the final product obtained in Example 4.

### DESCRIPTION OF EMBODIMENTS

As described above, it has been desired to develop a highly-efficient industrial method for producing an industrially useful, hydrolysable silicon compound having an alicyclic structure (particularly a norbornane ring) and a carbonyl group.

The present inventors have attempted to synthesize a silicon compound having an alicyclic structure of a certain structure by a hydrosilylation reaction. However, the inventors found out that when known hydrosilylation reaction conditions were employed to produce the silicon compound, a large amount of the raw materials remained after the reactions, bringing about problems of low yield and purification difficulty. Specifically, when the reaction conditions described in Patent Document 3 were employed, the reaction stopped incompletely, so that the raw materials remained in large amounts, decreasing the yield. Moreover, under the reaction conditions described in Patent Document 4, the hydrosilylation reaction did not progressed well.

Hence, the present inventors have earnestly examined a hydrosilylation reaction of a carbonyl group-containing alicyclic olefin compound. As a result, the inventors have found that the silicon compound can be produced in high yield by the reaction while an acidic compound or acidic compound precursor is gradually added in the presence of a platinum-based catalyst. This finding has led to the completion of the present invention.

Specifically, the present invention is a method for producing a silicon compound shown by the following general formula (3) through a hydrosilylation reaction between a hydrosilane compound shown by the following general formula (1) and a carbonyl group-containing alicyclic olefin compound shown by the following general formula (2), wherein
the hydrosilylation reaction between the hydrosilane compound shown by the following general formula (1) and the carbonyl group-containing alicyclic olefin compound shown by the following general formula (2) takes place while an acidic compound or acidic compound precursor is gradually added thereto in presence of a platinum-based catalyst: 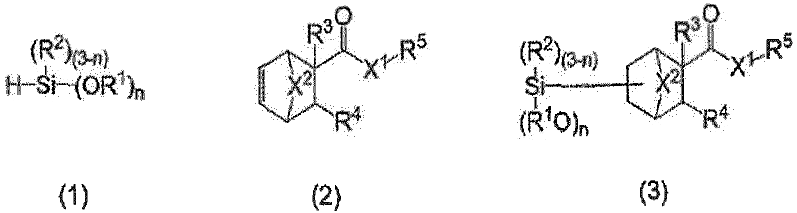 wherein R¹ and R² each independently represent a hydrocarbon group having 1 to 6 carbon atoms; "n" represents 1, 2, or 3; X¹ represents an oxygen atom or a single bond; X² represents a methylene group or an oxygen atom; R³ and R⁴ each independently represent a hydrogen atom or a methyl group; and R⁵ represents a monovalent group having 1 to 20 carbon atoms and is optionally bonded to R³ or R⁴ to form a ring.

Hereinafter, the present invention will be described in detail. However, the present invention is not limited thereto.

### [Method for Producing Silicon Compound]

The present invention provides a method for producing a silicon compound shown by the general formula (3) through a hydrosilylation reaction between a hydrosilane compound shown by the general formula (1) and a carbonyl group-containing alicyclic olefin compound shown by the general formula (2). In this method, the hydrosilylation reaction between the hydrosilane compound shown by the general formula (1) and the carbonyl group-containing alicyclic olefin compound shown by the general formula (2) takes place while an acidic compound or acidic compound precursor is gradually added thereto in the presence of a platinum-based catalyst. Hereinbelow, the hydrosilane compound, the carbonyl group-containing alicyclic olefin compound, and the hydrosilylation reaction which are employed in the present invention will be described in more details.

### <Hydrosilane Compound>

Here, the hydrosilane compound used as a raw material in the inventive method for producing a silicon compound is shown by the following general formula (1): 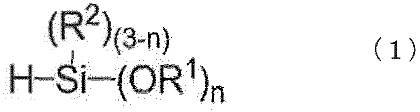 where R¹ and R² each independently represent a hydrocarbon group having 1 to 6 carbon atoms; "n" represents 1, 2, or 3.

In the general formula (1), R¹ and R² are each independently a hydrocarbon group having 1 to 6 carbon atoms. Specific examples of R¹ and R² include, but are not limited to, a methyl group, an ethyl group, a propyl group, an isopropyl group, a n-butyl group, an isobutyl group, a s-butyl group, a t-butyl group, a pentyl group, a neopentyl group, a cyclopentyl group, a hexyl group, a cyclohexyl group, and a phenyl group. R¹ is particularly preferably a methyl group, an ethyl group, a propyl group, and an isopropyl group. R² is particularly preferably a methyl group, an ethyl group, and a phenyl group. "n" is 1, 2, or 3.

More specific examples of the hydrosilane compound include, but are not limited to, trimethoxysilane, methyldimethoxysilane, ethyldimethoxysilane, dimethylmethoxysilane, diethylmethoxysilane, triethoxysilane, methyldiethoxysilane, ethyldiethoxysilane, dimethylethoxysilane, diethylethoxysilane, phenyldiethoxysilane, phenyldimethoxysilane, diphenylethoxysilane, diphenylmethoxysilane, and the like.

### <Carbonyl Group-Containing Alicyclic Olefin Compound>

The carbonyl group-containing alicyclic olefin compound used as a raw material in the inventive method for producing a silicon compound is shown by the following general formula (2): 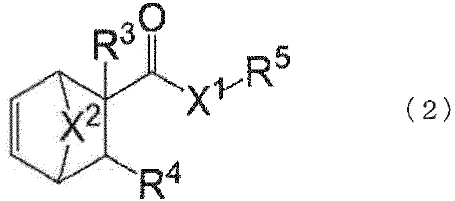 where X¹ represents an oxygen atom or a single bond; X² represents a methylene group or an oxygen atom; R³ and R⁴ each independently represent a hydrogen atom or a methyl group; and R⁵ represents a monovalent group having 1 to 20 carbon atoms. Optionally, R⁵ is bonded to R³ or R⁴ to form a ring. When the ring is formed, R³ or R⁴ is a single bond, and R⁵ is a divalent group having 1 to 20 carbon atoms.

In the general formula (2), X¹ is an oxygen atom or a single bond. X¹ is particularly preferably an oxygen atom. X² is a methylene group or an oxygen atom. X² is particularly preferably a methylene group. Moreover, R³ and R⁴ are each independently a hydrogen atom, a methyl group, or a single bond. R⁴ is particularly preferably a hydrogen atom. R⁵ is a monovalent group having 1 to 20 carbon atoms or a divalent group having 1 to 20 carbon atoms, and optionally bonded to R³ or R⁴ to form a ring. Specific examples of R⁵ include, but are not limited to, a methyl group, an ethyl group, a propyl group, an isopropyl group, a n-butyl group, an isobutyl group, a s-butyl group, a t-butyl group, a pentyl group, a neopentyl group, a cyclopentyl group, a hexyl group, a cyclohexyl group, a phenyl group, and a benzyl group.

Additionally, the carbonyl group-containing alicyclic olefin compound shown by the general formula (2) may be a 5-norbornene-2-carboxylic acid ester compound shown by the following general formula (4): 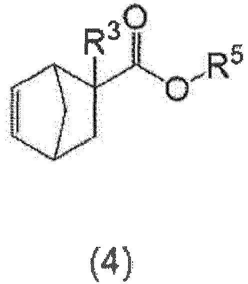 where R³ represents a hydrogen atom or a methyl group; and R⁵ represents a monovalent group having 1 to 20 carbon atoms. Optionally, R⁵ is bonded to R³ to form a ring.

More specific examples of the carbonyl group-containing alicyclic olefin compound include the following compounds, but are not limited thereto. In the following formulae, Me represents a methyl group, Et represents an ethyl group, Pr represents a propyl group, and i-Pr represents an isopropyl group. The same applies hereinafter.

### 1/2 (left)

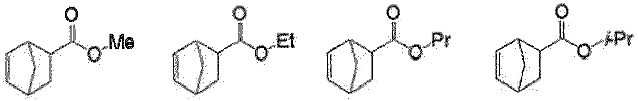

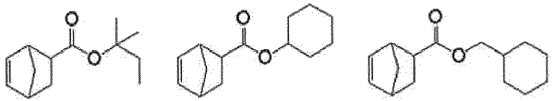

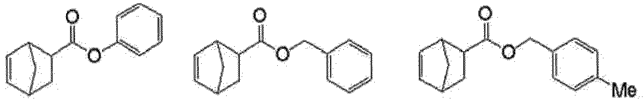

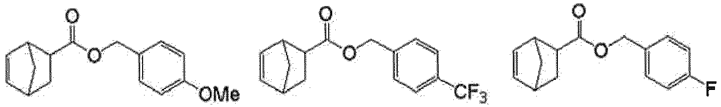

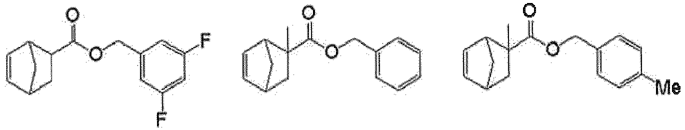

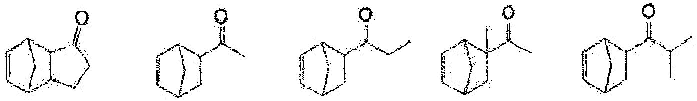

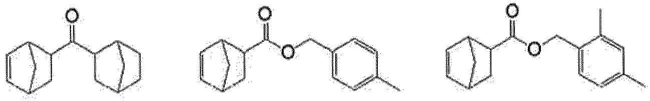

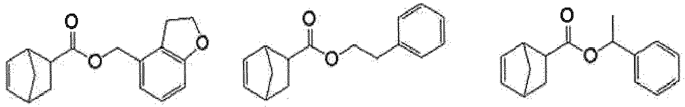

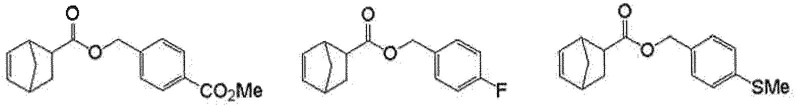

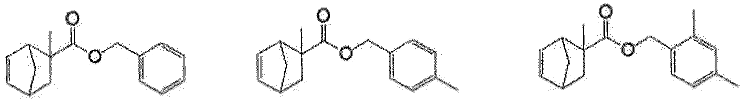

### 2/2 (right)

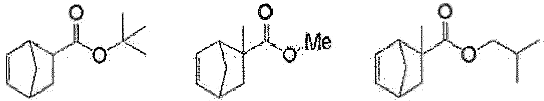

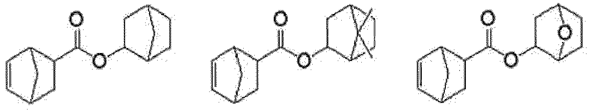

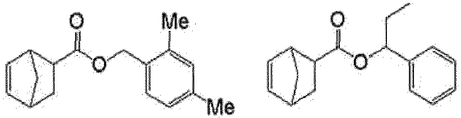

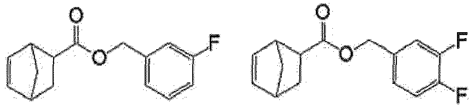

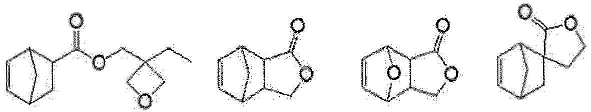

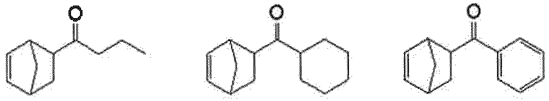

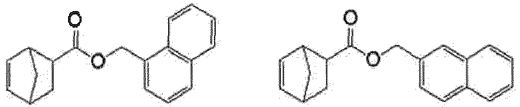

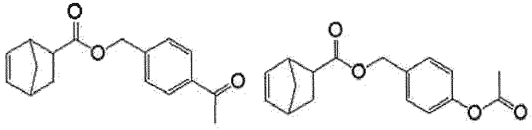

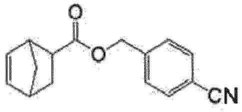

These compounds may have enantiomers and diastereomers. The above structural formulae are shown as representatives of all of these stereoisomers. These stereoisomers may be used alone, or may be used as a mixture.

### <Silicon Compound>

A silicon compound obtained by the inventive method for producing a silicon compound is shown by the following general formula (3): 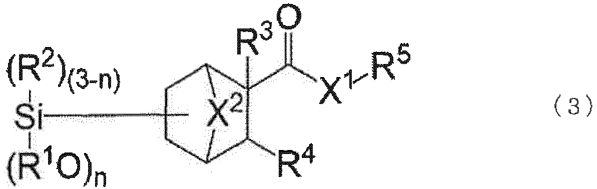 where R¹ and R² each independently represent a hydrocarbon group having 1 to 6 carbon atoms; X¹ represents an oxygen atom or a single bond; X² represents a methylene group or an oxygen atom; R³ and R⁴ each independently represent a hydrogen atom or a methyl group; and R⁵ represents a monovalent group having 1 to 20 carbon atoms. Optionally, R⁵ is bonded to R³ or R⁴ to form a ring. When the ring is formed, R³ or R⁴ is a single bond, and R⁵ is a divalent group having 1 to 20 carbon atoms. "n" represents 1, 2, or 3.

More specific examples of the silicon compound include the following compounds, but are not limited thereto.

### 1/4 (upper-left)

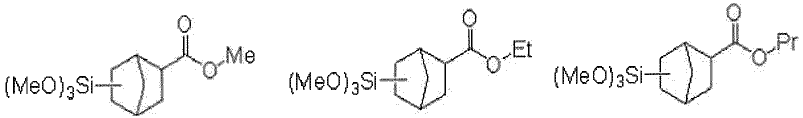

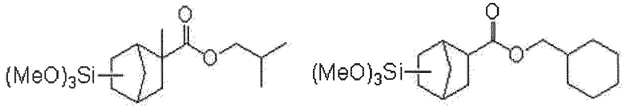

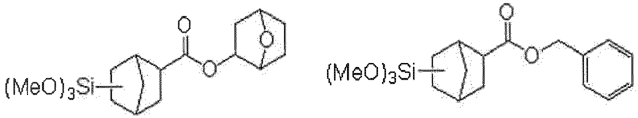

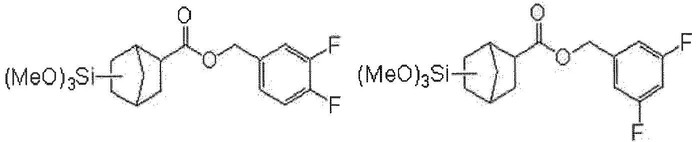

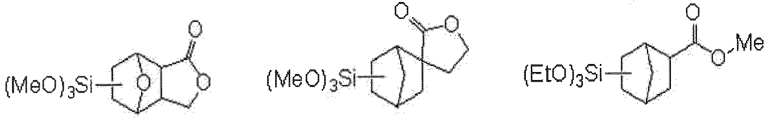

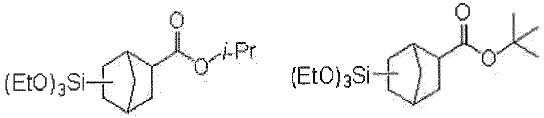

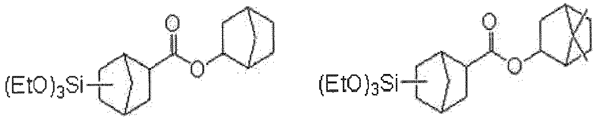

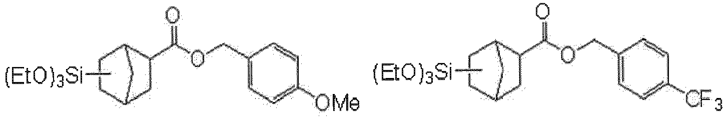

### 2/4 (upper-right)

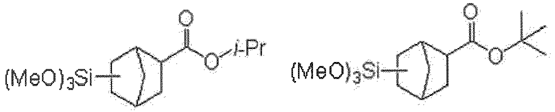

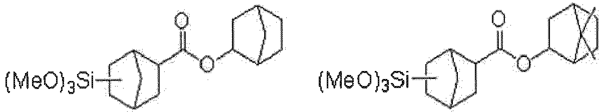

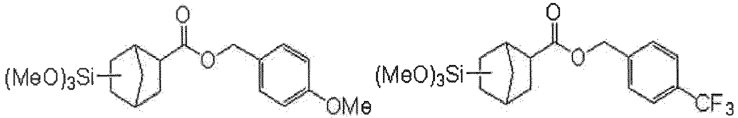

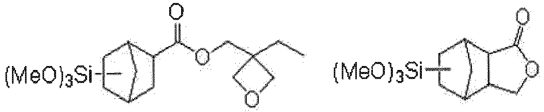

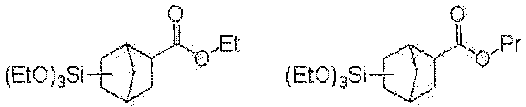

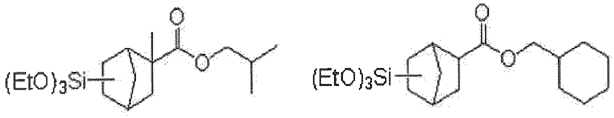

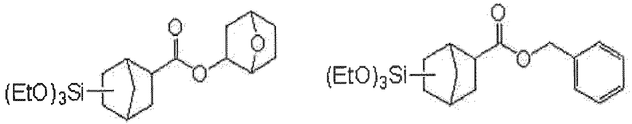

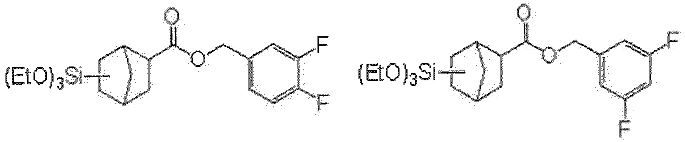

### 3/4 (lower-left)

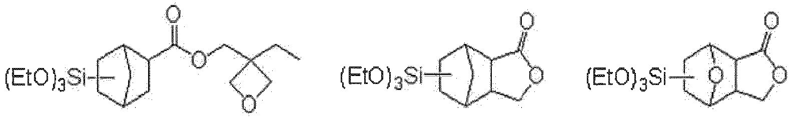

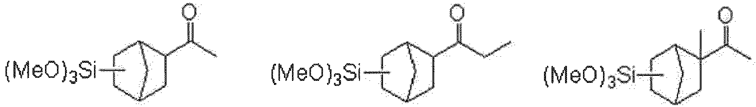

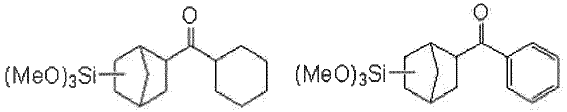

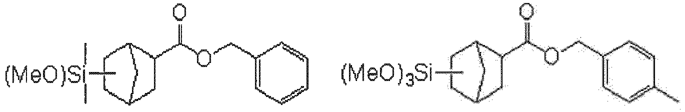

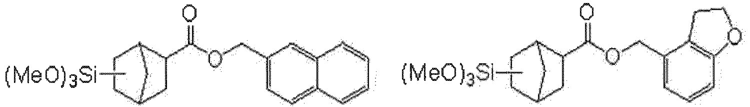

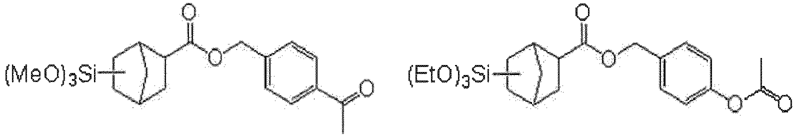

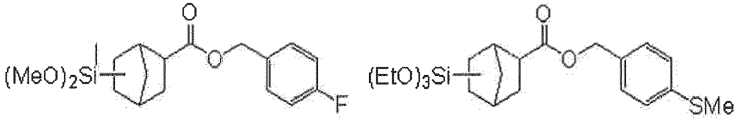

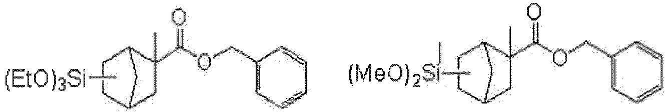

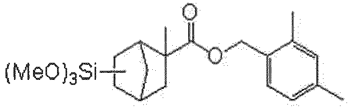

### 4/4 (lower-right)

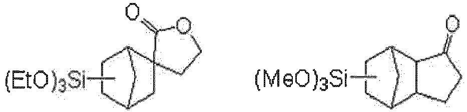

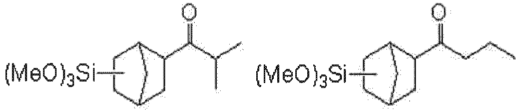

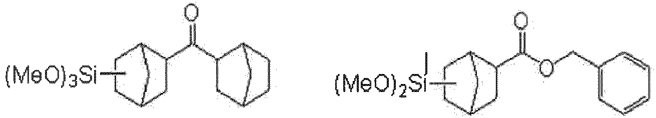

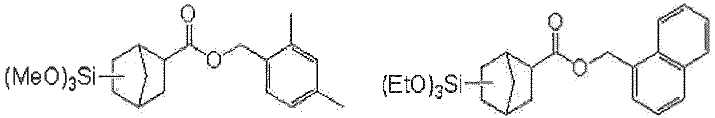

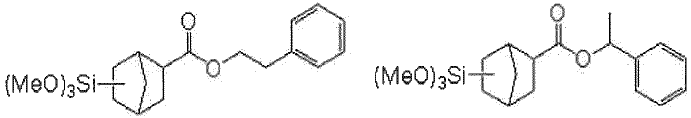

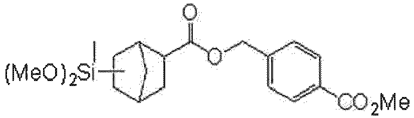

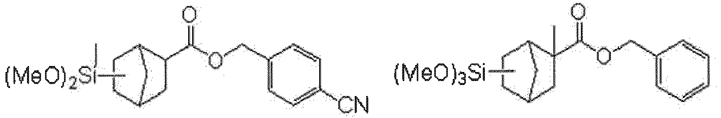

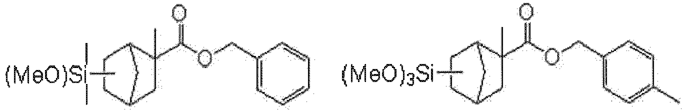

These compounds may have enantiomers and diastereomers. The above structural formulae are shown as representatives of all of these stereoisomers. These stereoisomers may be used alone, or may be used as a mixture.

### <Hydrosilylation Reaction>

As follows, the inventive method for producing a silicon compound is a method in which the silicon compound shown by the general formula (3) (silicon compound (3)) is produced by utilizing a hydrosilylation reaction between the hydrosilane compound shown by the general formula (1) (hydrosilane compound (1)) and the carbonyl group-containing alicyclic olefin compound shown by the general formula (2) (carbonyl group-containing alicyclic olefin compound (2)). Hereinafter, the hydrosilylation reaction utilized in the inventive method for producing a silicon compound will be described in detail. 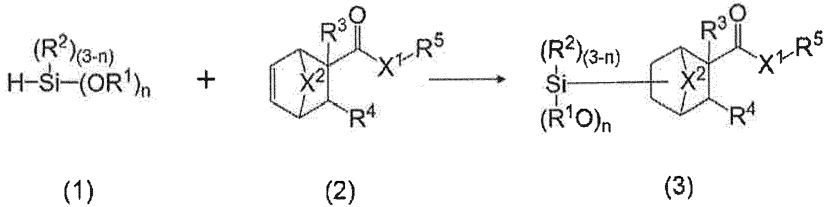 In the above general formulae, R¹, R², R³, R⁴, R⁵, X¹, X², and "n" are as defined above.

The blending ratio between the hydrosilane compound (1) and the carbonyl group-containing alicyclic olefin compound (2) is not particularly limited. Nevertheless, from the viewpoints of reactivity and productivity, the hydrosilane compound (1) is preferably in a range of 0.5 to 2 mol, particularly preferably 0.7 to 1.3 mol, per mol of the carbonyl group-containing alicyclic olefin compound (2).

Examples of the platinum-based catalyst used in the present invention include catalysts obtained by diluting a platinum catalyst with an organic solvent such as an alcohol solution of chloroplatinic acid or a toluene or xylene solution of platinum-1,3-divinyl-1,1,3,3-tetramethyldisiloxane complex; chloroplatinic acid, tetrakis triphenylphosphine platinum, dichlorobis triphenylphosphine platinum, dichlorobis acetonitrile platinum, dichlorobis benzonitrile platinum, dichlorocyclooctadiene platinum, bis(acetylacetonato)platinum; supported catalysts such as platinum-carbon, platinum-alumina, and platinum-silica; and the like. Among these, particularly from the viewpoint of selectivity, preferable are catalysts obtained by diluting a platinum vinylsiloxane complex, such as platinum divinyltetramethyldisiloxane complex or platinum tetravinyltetramethylcyclotetrasiloxane complex, with an organic solvent. A specific example thereof includes a toluene or xylene solution of platinum-1,3-divinyl-1,1,3,3-tetramethyldisiloxane complex.

The amount of the platinum-based catalyst to be used is not particularly limited, but is preferably 0.00001 to 5 mol, further preferably 0.00005 to 4 mol, and particularly preferably 0.0001 to 3 mol, per mol of the carbonyl group-containing alicyclic olefin compound (2) from the viewpoints of reactivity and productivity. When the platinum-based catalyst is used in an amount of 0.00001 mol or more, the catalytic effect is more sufficiently exhibited. When the amount is 5 mol or less, the reaction-promoting effect corresponding to the catalyst amount is surely obtained.

Specific examples of the acidic compound used in the present invention include, but are not limited to, formic acid, acetic acid, propionic acid, n-butyric acid, isobutyric acid, hexanoic acid, cyclohexanoic acid, lauric acid, stearic acid, oxalic acid, adipic acid, benzoic acid, phthalic acid, chloroacetic acid, dichloroacetic acid, trifluoroacetic acid, para-chlorobenzoic acid, trimethylsilyl acetate, acrylic acid, methacrylic acid, oleic acid, lactic acid, acetoacetic acid, glyoxylic acid, glutamic acid, pivalic acid, t-butyl acetate, pentanoic acid, and undecanoic acid. Specific examples of the acidic compound precursor include, but are not limited to, carboxylic acid silyl esters such as trimethylsilyl formate, trimethylsilyl acetate, triethylsilyl propionate, trimethylsilyl benzoate, trimethylsilyl trifluoroacetate, trimethylsilyl butyrate, dimethyldiacetoxysilane, diphenyldiacetoxysilane, methyltriacetoxysilane, and silicon tetrabenzoate; carboxylic acid anhydrides such as acetic anhydride, propionic anhydride, and benzoic anhydride; and carboxylic acid halides such as acetyl chloride, butyryl chloride, and benzoyl chloride.

In addition, the structural formulae of the aforementioned acidic compounds and acidic compound precursors are shown below.

### 1/2 (upper)

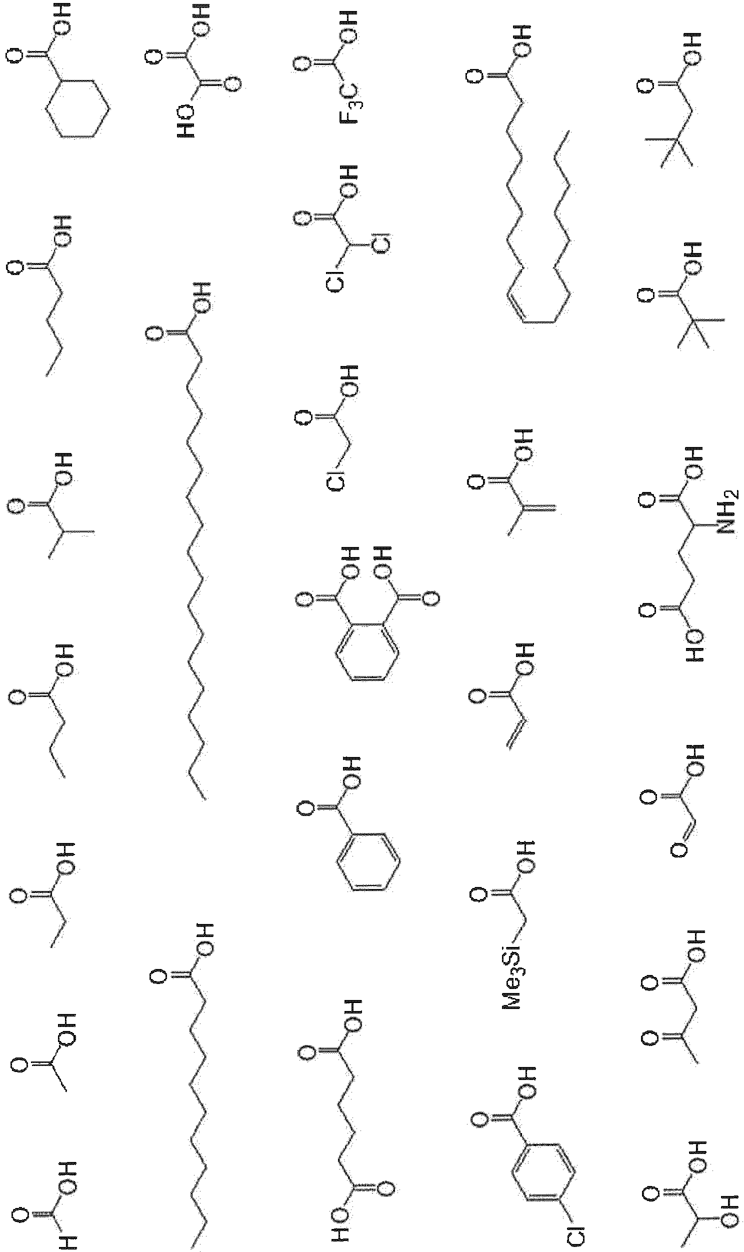

### 2/2 (lower)

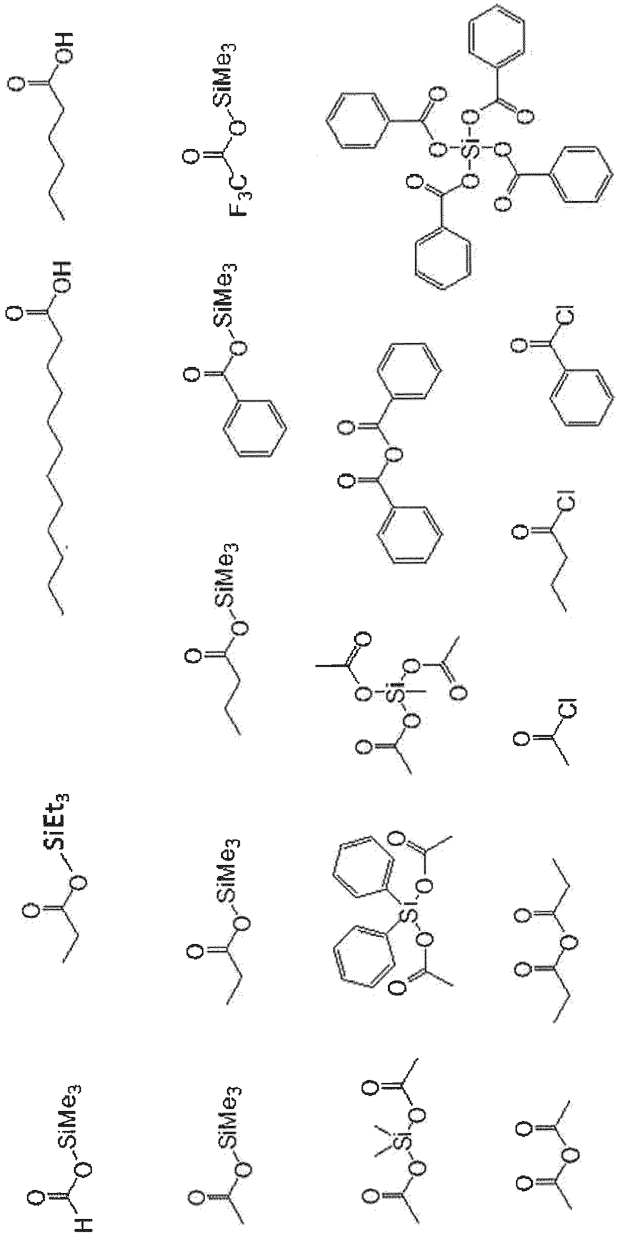

The acidic compound or acidic compound precursor used in the present invention is particularly preferably a carboxylic acid having 1 to 20 carbon atoms from the viewpoints of reactivity and yield. The amount of the acidic compound or acidic compound precursor to be used is not particularly limited, but is preferably in a range of 0.0001 to 1 mol, particularly preferably 0.001 to 0.5 mol, per mol of the silicon compound (3) from the viewpoints of reactivity and product quality.

Although the reaction progresses without a solvent, it is also possible to use a solvent. Examples of the usable solvent include hydrocarbon solvents such as pentane, hexane, cyclohexane, heptane, isooctane, benzene, toluene, and xylene; ether solvents such as diethyl ether, tetrahydrofuran, and dioxane; ester solvents such as ethyl acetate and butyl acetate; aprotic polar solvents such as acetonitrile and N,N-dimethylformamide; chlorinated solvents such as dichloromethane and chloroform; and the like. One of these solvents may be used alone, or two or more thereof may be used in mixture. The reaction temperature of the reaction is not particularly limited, and may be increased during the reaction as necessary. The temperature preferably is 0 to 200°C, particularly preferably 10 to 150°C.

In the inventive method for producing a silicon compound, it is important to gradually add the acidic compound or acidic compound precursor (hereinafter referred to as acid catalyst) in the presence of the platinum-based catalyst during the reaction. As the method for gradually adding the acid catalyst, the acid catalyst may be fed separately multiple times (added intermittently), or continuously fed. This continuous feeding is more preferable because the reaction will proceed successively without leaving a large amount of the two raw materials unreacted in the system, so that even when the acid catalyst is further added, the unreacted portions of the raw materials will neither react instantly nor cause runaway reaction.

The method for mixing the raw materials in the reaction is not particularly limited. Specific examples thereof include the following five methods. It should be noted that, in any case, the acid catalyst to be gradually added may or may not be diluted with the aforementioned reaction solvent or other raw material(s). 1) A reactor is first charged with the alicyclic olefin and the platinum-based catalyst; then, the hydrosilane compound and the acid catalyst are gradually added thereto in mixture or separately. 2) A reactor is first charged with a platinum-based catalyst; then, the alicyclic olefin, the hydrosilane compound, and the acid catalyst are gradually added in mixture or separately. 3) A reactor is first charged with the platinum-based catalyst and the hydrosilane compound; then, the alicyclic olefin and the acid catalyst are gradually added in mixture or separately. 4) A reactor is first charged with the platinum-based catalyst and a portion of the alicyclic olefin; then, the hydrosilane compound and a mixture of the acid catalyst with the rest of the alicyclic olefin are gradually added in mixture or separately. 5) A reactor is first charged with the platinum-based catalyst, the alicyclic olefin, and the hydrosilane compound; then, the acid catalyst is gradually added. Among these, 1) to 4) are particularly preferable because the reaction is easily controlled.

In view of yield, the reaction time is desirably determined through monitoring of the reaction by gas chromatography (GC) or the like to complete the reaction. Nevertheless, the reaction time is normally about 0.5 to 24 hours. When the reaction mixture happens to have a sufficient purity, the reaction mixture can be directly used as the final product. Nonetheless, as necessary, the reaction mixture can be used after purification by various purification methods such as distillation, filtration, washing, column separation, and absorbent treatment. To remove trace impurities such as catalyst and to achieve high purity, purification by distillation is particularly preferable.

### [Silicon Compound]

Next, the present invention provides a silicon compound shown by the following general formula (5). Hereinbelow, the silicon compound shown by the following general formula (5) will be described specifically. 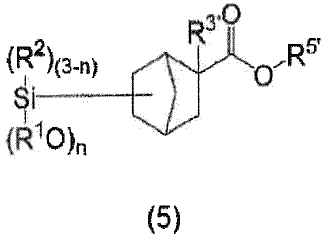 where R¹ and R² each independently represent a hydrocarbon group having 1 to 6 carbon atoms; "n" represents 1, 2, or 3; R^{3'} represents a hydrogen atom or a methyl group; and R^{5'} represents a substituted or unsubstituted aralkyl group having 7 to 20 carbon atoms.

In the general formula (5), R^{3'} is a hydrogen atom or a methyl group. R^{5'} is a substituted or unsubstituted aralkyl group having 7 to 20 carbon atoms. R^{5'} may contain oxygen, nitrogen, sulfur, fluorine, chlorine, and/or bromine. R^{5'} is particularly preferably a substituted or unsubstituted benzyl group. This substituent is particularly an alkyl group, an alkoxy group, an alkylcarbonyl group, an acyloxy group, an alkylthio group, a fluoroalkyl group, or an alkoxycarbonyl group, each of which has 1 to 13 carbon atoms; a cyano group or a fluorine atom. "n" is 1, 2, or 3. In the general formula (5), the substitution position of silicon on the norbornane ring may be the 5-position or the 6-position. A mixture of the compounds respectively substituted at the 5- and 6-positions is more preferable.

More specific examples of the silicon compound shown by the general formula (5) include the following compounds, but are not limited thereto.

### 1/2 (upper)

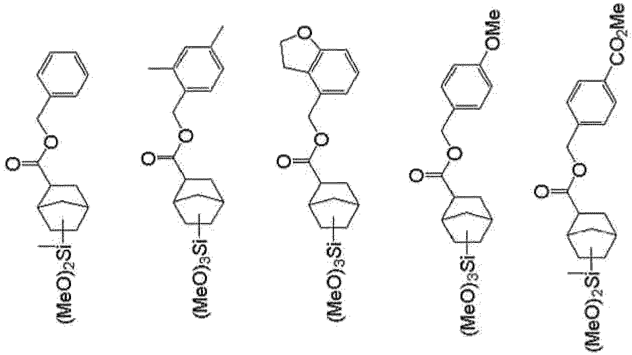

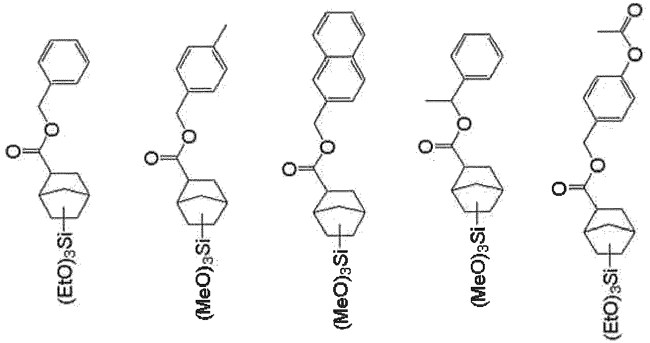

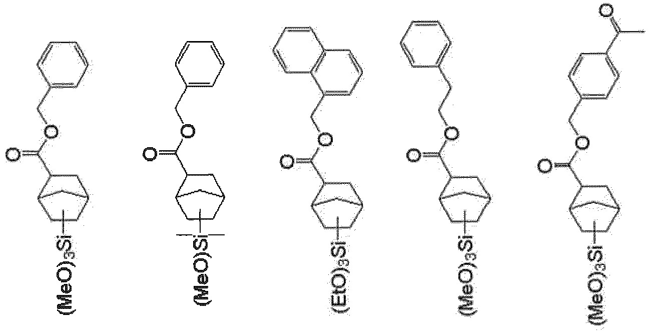

### 2/2 (lower)

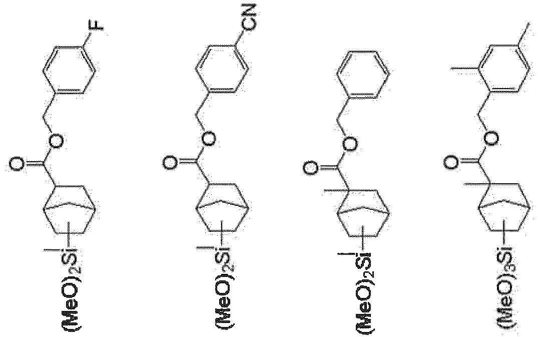

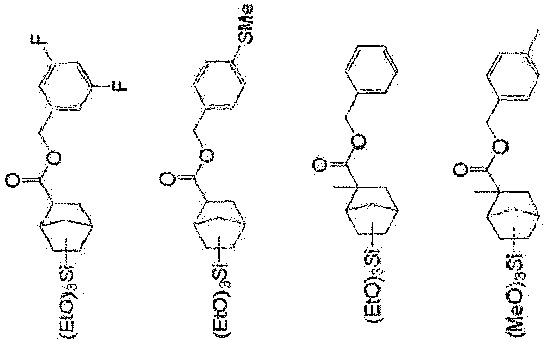

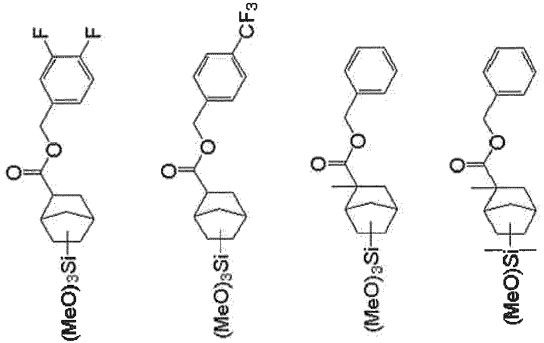

These compounds may have enantiomers and diastereomers. The above structural formulae are shown as representatives of all of these stereoisomers. These stereoisomers may be used alone, or may be used as a mixture.

### EXAMPLE

Hereinafter, the present invention will be specifically described with reference to Examples and Comparative Examples. However, the present invention is not limited to the following Examples.

### [Example 1]

A 3000-ml four-necked glass flask was equipped with a reflux condenser, a thermometer, and a stirrer. The inside of the flask was purged with nitrogen. This flask was charged with 777 g (4.00 mol) of t-butyl 5-norbornene-2-carboxylate and 6.24 g (0.096 mol) of a 3% toluene solution containing platinum-1,3-divinyl-1,1,3,3-tetramethyldisiloxane complex. While the bulk temperature was adjusted to 70 to 80°C, a mixture containing 587 g (4.80 mol) of trimethoxysilane and 11.6 g (0.192 mol) of acetic acid was added dropwise over 3.5 hours. Then, the resultant was aged at a jacket temperature of 80°C for 2 hours. As the GC analysis result of the reaction solution, the conversion ratio to the final product was 99%. The resulting reaction solution was distilled under reduced pressure. Thus, 1075 g (3.40 mol) of t-butyl 5(or 6)-trimethoxysilylnorbornane-2-carboxylate was obtained as a fraction at 94°C/15Pa. The yield was 85.0%.

### [Example 2]

A 100-ml four-necked glass flask was equipped with a reflux condenser, a thermometer, and a stirrer. The inside of the flask was purged with nitrogen. This flask was charged with 35.0 g (0.17 mol) of isobutyl 2-methyl-5-norbornene-2-carboxylate and 0.26 g (0.00004 mol) of a 3% toluene solution containing platinum-1,3-divinyl-1,1,3,3-tetramethyldisiloxane complex. While the bulk temperature was adjusted to 70 to 84°C, a mixture containing 24.6 g (0.20 mol) of trimethoxysilane and 0.49 g (0.0081 mol) of acetic acid was added dropwise over 1 hour. Then, the resultant was aged at a jacket temperature of 80°C for 2 hours. As the GC analysis result of the reaction solution, the conversion ratio to the final product was 98%. The resulting reaction solution was distilled under reduced pressure. Thus, 46.9 g (0.146 mol) of isobutyl 2-methyl-5(or 6)-trimethoxysilylnorbornane-2-carboxylate was obtained as a fraction at 103°C/20 Pa. The yield was 87.1%.

### [Example 3]

A 200-ml four-necked glass flask was equipped with a reflux condenser, a thermometer, and a stirrer. The inside of the flask was purged with nitrogen. This flask was charged with 50.0 g (0.22 mol) of benzyl 5-norbornene-2-carboxylate and a 0.28 g (0.00004 mol) of a 3% toluene solution containing platinum-1,3-divinyl-1,1,3,3-tetramethyldisiloxane complex. While the bulk temperature was adjusted to 60 to 80°C, a mixture containing 28.1 g (0.23 mol) of trimethoxysilane and 0.56 g (0.0093 mol) of acetic acid was added dropwise over 2 hours. Then, the resultant was aged at a jacket temperature of 55°C for 24 hours. As the GC analysis result of the reaction solution, the conversion ratio to the final product was 97%. The resulting reaction solution was distilled under reduced pressure. Thus, 63.4 g (0.181 mol) of benzyl 5(or 6)-trimethoxysilylnorbornane-2-carboxylate was obtained as a fraction at 145°C/20 Pa. The yield was 82.6%.

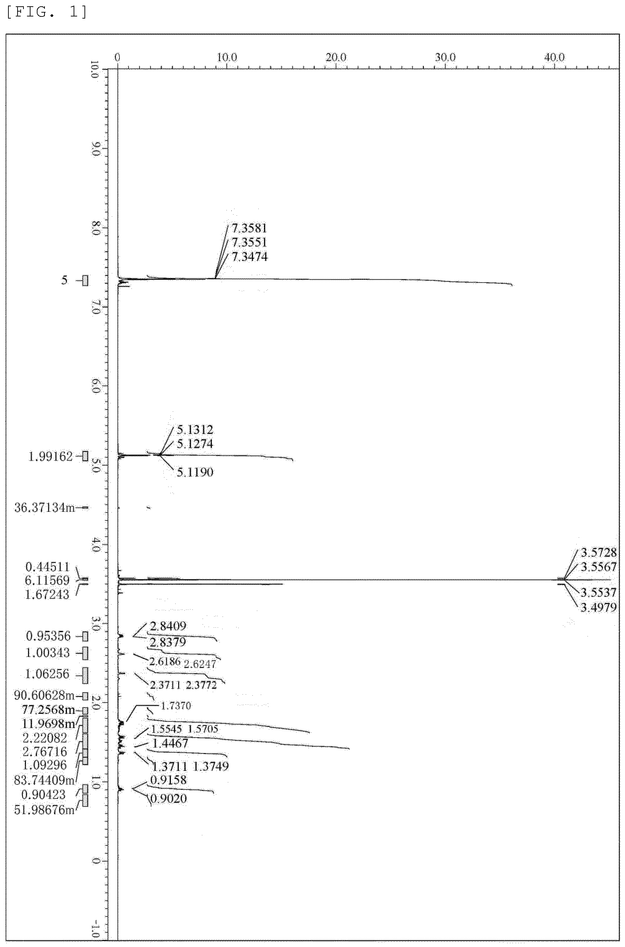

The spectrum data on the obtained final product is shown below. FIG. 1 shows the result of the nuclear magnetic resonance spectrum (¹H-NMR/CDCl₃). Infrared absorption spectrum (IR (D-ATR); cm⁻¹) 2950, 2876, 2841, 1733, 1612, 1522, 1452, 1437, 1378, 1345, 1291, 1252, 1188, 1158, 1087, 1036, 1016, 981, 941, 900, 870, 813, 724, 630, 577, 525, 457 cm⁻¹.

### [Example 4]

A 2000-ml four-necked glass flask was equipped with a reflux condenser, a thermometer, and a stirrer. The inside of the flask was purged with nitrogen. This flask was charged with 435.0 g (1.65 mol) of 3,4-difluorobenzyl 5-norbornene-2-carboxylate and 2.57 g (0.00040 mol) of a 3% toluene solution containing platinum-1,3-divinyl-1,1,3,3-tetramethyldisiloxane complex. While the bulk temperature was adjusted to 80 to 90°C, a mixture containing 241.0 g (1.98 mol) of trimethoxysilane and 4.74 g (0.079 mol) of acetic acid was added dropwise over 4 hours. Then, the resultant was aged at a jacket temperature of 80°C for 24 hours. As the GC analysis result of the reaction solution, the conversion ratio to the final product was 95%. The resulting reaction solution was distilled under reduced pressure. Thus, 536.6 g (1.389 mol) of 3,4-difluorobenzyl 5(or 6)-trimethoxysilylnorbornane-2-carboxylate was obtained as a fraction at 161°C/20 Pa. The yield was 84.4%.

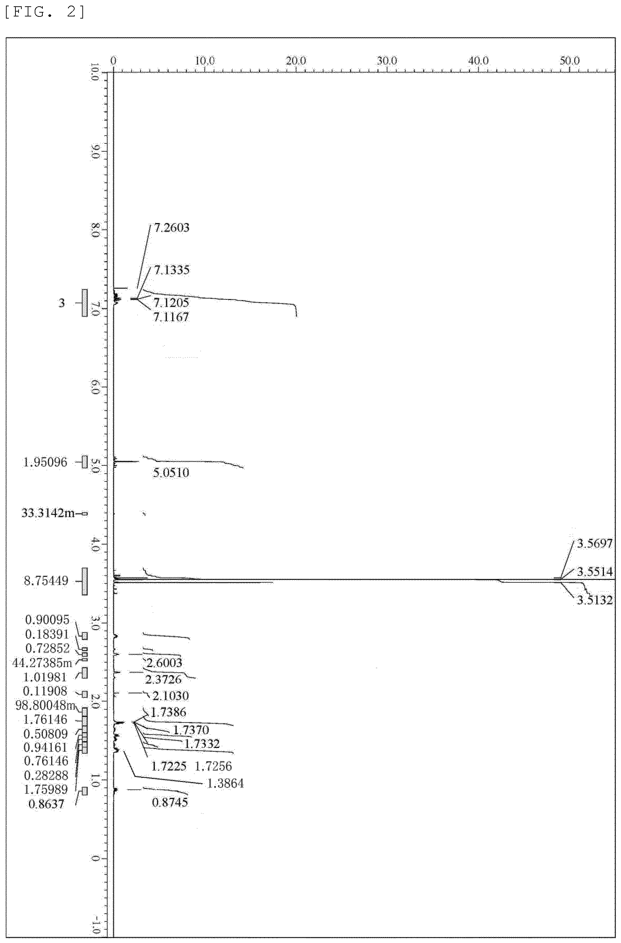

The spectrum data on the obtained final product is shown below. FIG. 2 shows the result of the nuclear magnetic resonance spectrum (¹H-NMR/CDCl₃). Infrared absorption spectrum (IR (D-ATR); cm⁻¹) 3033, 2950, 2876, 2840, 1732, 1498, 1456, 1380, 1345, 1302, 1283, 1253, 1188, 1158, 1087, 1029, 1016, 980, 947, 909, 806, 753, 728, 698, 504, 457 cm⁻¹.

### [Example 5]

A 100-ml four-necked glass flask was equipped with a reflux condenser, a thermometer, and a stirrer. The inside of the flask was purged with nitrogen. This flask was charged with 15.0 g (0.077 mol) of t-butyl 5-norbornene-2-carboxylate and 0.200 g (0.00003 mol) of a 3% toluene solution containing platinum-1,3-divinyl-1,1,3,3-tetramethyldisiloxane complex. While the bulk temperature was adjusted to 75 to 86°C, 18.9 g (0.154 mol) of trimethoxysilane and 15.0 g (0.077 mol) of t-butyl 5-norbornene-2-carboxylate with 0.37 g (0.0062 mol) of acetic acid were separately added dropwise over 1 hour by using different dropping funnels. Then, the resultant was aged at a jacket temperature of 75°C for 2 hours. As the GC analysis result of the reaction solution, the conversion ratio to the final product was 99%. The resulting reaction solution was distilled under reduced pressure. Thus, 41.9 g (0.132 mol) of t-butyl 5(or 6)-trimethoxysilylnorbornane-2-carboxylate was obtained as a fraction at 94°C/15 Pa. The yield was 86.0%.

### [Example 6]

A 100-ml four-necked glass flask was equipped with a reflux condenser, a thermometer, and a stirrer. The inside of the flask was purged with nitrogen. This flask was charged with 25.0 g (0.110 mol) of benzyl 5-norbornene-2-carboxylate and 0.310 g (0.00005 mol) of a 3% toluene solution containing platinum-1,3-divinyl-1,1,3,3-tetramethyldisiloxane complex. While the bulk temperature was adjusted to 50 to 75°C, 29.5 g (0.24 mol) of trimethoxysilane and 25.0 g (0.110 mol) of benzyl 5-norbornene-2-carboxylate with 0.58 g (0.0096 mol) of acetic acid were separately added dropwise over 1 hour by using different dropping funnels. Then, the resultant was aged at a jacket temperature of 55°C for 17 hours. As the GC analysis result of the reaction solution, the conversion ratio to the final product was 95%. The resulting reaction solution was distilled under reduced pressure. Thus, 62.2 g (0.177 mol) of benzyl 5(or 6)-trimethoxysilylnorbornane-2-carboxylate was obtained as a fraction at 145°C/20 Pa. The yield was 81.0%.

### [Example 7]

A 100-ml four-necked glass flask was equipped with a reflux condenser, a thermometer, and a stirrer. The inside of the flask was purged with nitrogen. This flask was charged with 30.0 g (0.154 mol) of t-butyl 5-norbornene-2-carboxylate and 0.200 g (0.00003 mol) of a 3% toluene solution containing platinum-1,3-divinyl-1,1,3,3-tetramethyldisiloxane complex. While the bulk temperature was adjusted to 75 to 90°C, 18.9 g (0.154 mol) of trimethoxysilane and a solution in which 0.72 g (0.0062 mol) of 2,2-dimethyl butyrate was dissolved in 10.0 g (0.064 mol) of undecane were separately added dropwise over 1 hour by using different dropping funnels. Then, the resultant was aged at a jacket temperature of 75°C for 2 hours. As the GC analysis result of the reaction solution, the conversion ratio to the final product was 97%. The resulting reaction solution was distilled under reduced pressure. Thus, 40.9 g (0.129 mol) of t-butyl 5(or 6)-trimethoxysilylnorbornane-2-carboxylate was obtained as a fraction at 94°C/15 Pa. The yield was 84.0%.

### [Example 8]

A 3000-ml four-necked glass flask was equipped with a reflux condenser, a thermometer, and a stirrer. The inside of the flask was purged with nitrogen. This flask was charged with 777 g (4.00 mol) of t-butyl 5-norbornene-2-carboxylate and 13 g (0.002 mol) of a 3% toluene solution containing platinum-1,3-divinyl-1,1,3,3-tetramethyldisiloxane complex. While the bulk temperature was adjusted to 70 to 80°C, a mixture containing 464 g (3.80 mol) of trimethoxysilane and 4.8 g (0.08 mol) of acetic acid was added dropwise over 3 hours. Then, the resultant was aged at a jacket temperature of 80°C for 2 hours. As the GC analysis result of the reaction solution, the conversion ratio to the final product was 70%, indicating that the reaction progressed insufficiently. To promote the reaction, 1.2 g of acetic acid was additionally added into the system, thereby generating heat rapidly. As the GC analysis result of the reaction solution, the conversion ratio to the final product was 98%. The resulting reaction solution was distilled under reduced pressure. Thus, 1046 g (3.31 mol) of t-butyl 5(or 6)-trimethoxysilylnorbornane-2-carboxylate was obtained as a fraction at 94°C/15 Pa. The yield was 87.0%.

### [Comparative Example 1]

A mixture containing 777 g (4.0 mol) of t-butyl 5-norbornene-2-carboxylate, 13 g of a toluene solution containing platinum (0)-1,3-divinyl-1,1,3,3-tetramethyldisiloxane complex (platinum content: 3%), and 14.8 g (80 mmol) of acetic acid was heated and stirred under a nitrogen atmosphere at 75°C. To the reaction solution, 489 g (4.0 mol) of trimethoxysilane was added dropwise over 3 hours, and then heated and stirred at 75°C for 14 hours. As the GC analysis result of the reaction solution, the conversion ratio to the final product was 47%, indicating that the reaction progressed insufficiently. To promote the reaction, 3.7 g of acetic acid was additionally added into the system, thereby generating heat rapidly. Consequently, the reaction solution was boiled.

### [Comparative Example 2]

A 1000-ml four-necked glass flask was equipped with a reflux condenser, a thermometer, and a stirrer. The inside of the flask was purged with nitrogen. This flask was charged with 194 g (1.0 mol) of 3,4-difluorobenzyl 5-norbornene-2-carboxylate, 1.3 g of a toluene solution containing platinum (0)-1,3-divinyl-1,1,3,3-tetramethyldisiloxane complex (platinum content: 3%), and 0.9 g (20 mmol) of ammonium carbonate. While the bulk temperature was adjusted to 80 to 90°C, 122 g (1.0 mol) of trimethoxysilane was added dropwise over 4 hours, and then heated and stirred at 75°C for 14 hours. As the GC analysis result of the reaction solution, the conversion ratio to the final product was 10% and the raw materials remained in large amounts, indicating that the reaction progressed insufficiently.

In Examples 1 to 8 which utilized the inventive method for producing a silicon compound, the target silicon compounds were successfully obtained in high yields. Meanwhile, in Comparative Example 1 in which the acidic compound was not gradually added but initially introduced collectively, and in Comparative Example 2 in which ammonium carbonate was used instead of the acidic compound or acidic compound precursor and initially introduced collectively, the conversion ratio to the final products were low even if the raw materials were heated and stirred for long time after the completion of the dropwise addition. This revealed that the target silicon compounds were not obtained in high yields.

The above results showed that the production method of the present invention enables the hydrosilylation reaction between the hydrosilane compound and the carbonyl group-containing alicyclic olefin compound in high yield and the hydrosilylation reaction is applicable in industrial scale. These suggested that the industrial value of the inventive method should be high.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A method for producing a silicon compound shown by the following general formula (3) through a hydrosilylation reaction between a hydrosilane compound shown by the following general formula (1) and a carbonyl group-containing alicyclic olefin compound shown by the following general formula (2), wherein
the hydrosilylation reaction between the hydrosilane compound shown by the following general formula (1) and the carbonyl group-containing alicyclic olefin compound shown by the following general formula (2) takes place while an acidic compound or acidic compound precursor is gradually added thereto in presence of a platinum-based catalyst: 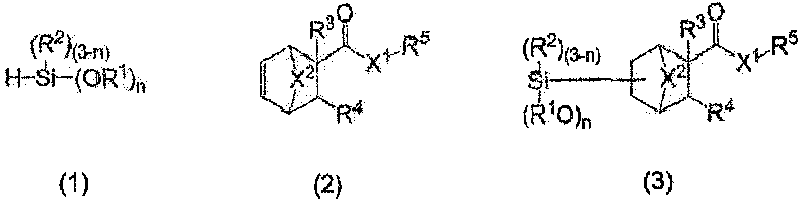 wherein R¹ and R² each independently represent a hydrocarbon group having 1 to 6 carbon atoms; "n" represents 1, 2, or 3; X¹ represents an oxygen atom or a single bond; X² represents a methylene group or an oxygen atom; R³ and R⁴ each independently represent a hydrogen atom or a methyl group; and R⁵ represents a monovalent group having 1 to 20 carbon atoms and is optionally bonded to R³ or R⁴ to form a ring.

2. The method for producing a silicon compound according to claim 1, wherein the acidic compound or acidic compound precursor is a carboxylic acid having 1 to 20 carbon atoms.

3. The method for producing a silicon compound according to claim 1 or 2, wherein the carbonyl group-containing alicyclic olefin compound shown by the general formula (2) is a 5-norbornene-2-carboxylic acid ester compound shown by the following general formula (4): 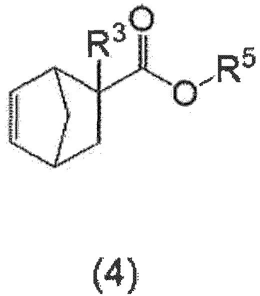 wherein R³ represents a hydrogen atom or a methyl group; and R⁵ represents a monovalent group having 1 to 20 carbon atoms and is optionally bonded to R³ to form a ring.

4. A silicon compound shown by the following general formula (5): 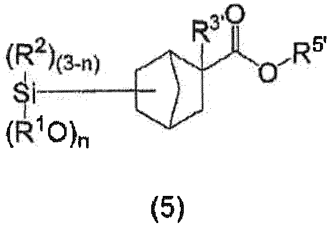 wherein R¹ and R² each independently represent a hydrocarbon group having 1 to 6 carbon atoms; "n" represents 1, 2, or 3; R^{3'} represents a hydrogen atom or a methyl group; and R^{5'} represents a substituted or unsubstituted aralkyl group having 7 to 20 carbon atoms, wherein substituted means that the substituent of R^{5'} is an alkyl group, an alkoxy group, an alkylcarbonyl group, an acyloxy group, an alkylthio group, a fluoroalkyl group, or an alkoxycarbonyl group, each of which has 1 to 13 carbon atoms; a cyano group or a fluorine atom.

## Patentansprüche

1. Verfahren zur Herstellung einer durch die folgende allgemeine Formel (3) dargestellten Siliciumverbindung durch eine Hydrosilylierungsreaktion zwischen einer durch die folgende allgemeine Formel (1) dargestellten Hydrosilanverbindung und einer durch die folgende allgemeine Formel (2) dargestellten carbonylgruppenhaltigen alicyclischen Olefinverbindung, wobei
die Hydrosilylierungsreaktion zwischen der durch die folgende allgemeine Formel (1) gezeigten Hydrosilanverbindung und der durch die folgende allgemeine Formel (2) gezeigten carbonylgruppenhaltigen alicyclischen Olefinverbindung stattfindet, während eine saure Verbindung oder ein Vorläufer einer sauren Verbindung allmählich in Gegenwart eines Katalysators auf Platinbasis zugegeben wird: 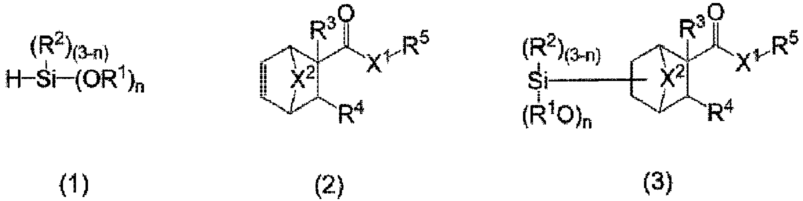 worin R¹ und R² jeweils unabhängig voneinander eine Kohlenwasserstoffgruppe mit 1 bis 6 Kohlenstoffatomen darstellen; "n" 1, 2 oder 3 darstellt; X¹ ein Sauerstoffatom oder eine Einfachbindung darstellt; X² eine Methylengruppe oder ein Sauerstoffatom darstellt; R³ und R⁴ jeweils unabhängig voneinander ein Wasserstoffatom oder eine Methylgruppe darstellen; und R⁵ eine monovalente Gruppe mit 1 bis 20 Kohlenstoffatomen darstellt und gegebenenfalls an R³ oder R⁴ unter Bildung eines Rings gebunden ist.

2. Verfahren zur Herstellung einer Siliciumverbindung nach Anspruch 1, wobei die saure Verbindung oder der Vorläufer der sauren Verbindung eine Carbonsäure mit 1 bis 20 Kohlenstoffatomen ist.

3. Verfahren zur Herstellung einer Siliciumverbindung nach Anspruch 1 oder 2, wobei die carbonylgruppenhaltige alicyclische Olefinverbindung, die durch die allgemeine Formel (2) dargestellt ist, eine 5-Norbornen-2-carbonsäureesterverbindung ist, die durch die folgende allgemeine Formel (4) dargestellt ist: 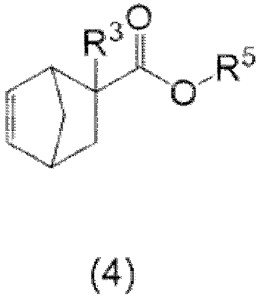 worin R³ ein Wasserstoffatom oder eine Methylgruppe darstellt; und R⁵ eine monovalente Gruppe mit 1 bis 20 Kohlenstoffatomen darstellt und gegebenenfalls an R³ unter Bildung eines Rings gebunden ist.

4. Siliciumverbindung, dargestellt durch die folgende allgemeine Formel (5) 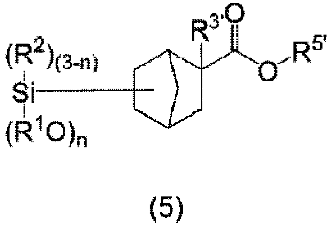 worin R¹ und R² jeweils unabhängig voneinander eine Kohlenwasserstoffgruppe mit 1 bis 6 Kohlenstoffatomen darstellen; "n" 1, 2 oder 3 darstellt; R^{3'} ein Wasserstoffatom oder eine Methylgruppe darstellt; und R^{5'} eine substituierte oder unsubstituierte Aralkylgruppe mit 7 bis 20 Kohlenstoffatomen, wobei substituiert bedeutet, daß der Substituent von R^{5'} eine Alkylgruppe, eine Alkoxygruppe, eine Alkylcarbonylgruppe, eine Acyloxygruppe, eine Alkylthiogruppe, eine Fluoralkylgruppe oder eine Alkoxycarbonylgruppe, die jeweils 1 bis 13 Kohlenstoffatome haben, eine Cyanogruppe oder ein Fluoratom ist, darstellt.

## Revendications

1. Procédé de production d'un composé de silicium représenté par la formule générale (3) suivante par une réaction d'hydrosilylation entre un composé hydrosilane représenté par la formule générale (1) suivante et un composé oléfine alicyclique contenant un groupe carbonyle représenté par la formule générale (2) suivante, dans lequel
la réaction d'hydrosilylation entre le composé hydrosilane représenté par la formule générale (1) suivante et le composé oléfine alicyclique contenant un groupe carbonyle représenté par la formule générale (2) suivante a lieu tandis qu'un composé acide ou un précurseur de composé acide y est ajouté progressivement en présence d'un catalyseur à base de platine : 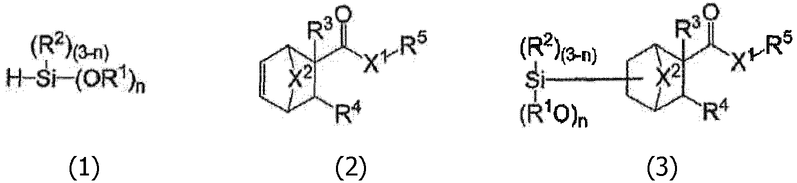 dans laquelle R¹ et R² représentent chacun indépendamment un groupe hydrocarboné ayant 1 à 6 atomes de carbone ; « n » représente 1, 2 ou 3 ; X¹ représente un atome d'oxygène ou une simple liaison ; X² représente un groupe méthylène ou un atome d'oxygène ; R³ et R⁴ représentent chacun indépendamment un atome d'hydrogène ou un groupe méthyle ; et R⁵ représente un groupe monovalent ayant 1 à 20 atomes de carbone et est éventuellement lié à R³ ou R⁴ pour former un cycle.

2. Procédé de production d'un composé de silicium selon la revendication 1, dans lequel le composé acide ou le précurseur de composé acide est un acide carboxylique ayant 1 à 20 atomes de carbone.

3. Procédé de production d'un composé de silicium selon la revendication 1 ou 2, dans lequel le composé oléfine alicyclique contenant un groupe carbonyle représenté par la formule générale (2) est un composé ester d'acide 5-norbornène-2-carboxylique représenté par la formule générale (4) suivante : 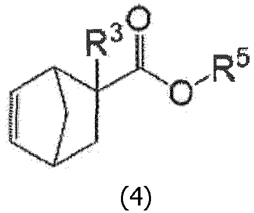 dans laquelle R³ représente un atome d'hydrogène ou un groupe méthyle ; et R⁵ représente un groupe monovalent ayant 1 à 20 atomes de carbone et est éventuellement lié à R³ pour former un cycle.

4. Composé de silicium représenté par la formule générale (5) suivante : 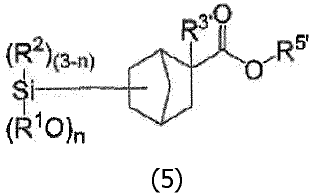 dans laquelle R¹ et R² représentent chacun indépendamment un groupe hydrocarboné ayant 1 à 6 atomes de carbone ; « n » représente 1, 2 ou 3 ; R^{3'} représente un atome d'hydrogène ou un groupe méthyle ; et R^{5'} représente un groupe aralkyle substitué ou non substitué ayant 7 à 20 atomes de carbone, dans lequel substitué signifie que le substituant de R^{5'} est un groupe alkyle, un groupe alcoxy, un groupe alkylcarbonyle, un groupe acyloxy, un groupe alkylthio, un groupe fluoroalkyle ou un groupe alcoxycarbonyle, chacun d'eux ayant 1 à 13 atomes de carbone ; un groupe cyano ou un atome de fluor.
